# EUROPEAN PATENT SPECIFICATION

(11) **EP 3 786 915 B1**
(45) Date of publication and mention of the grant of the patent: **08.11.2023**
(21) Application number: 19194924.7
(22) Date of filing: 02.09.2019
(51) Int. Cl.: G08G 1/00, B60W 30/18, G05D 1/02, G08G 1/16

(54) **A METHOD FOR SORTING VEHICLES OF VEHICLE PLATOONS**
VERFAHREN ZUM SORTIEREN VON FAHRZEUGEN VON FAHRZEUGKOLONNEN
PROCÉDÉ DE TRI DE VÉHICULES DE PELOTONS DE VÉHICULES

(43) Date of publication of application: 03.03.2021
(73) Proprietor: Ningbo Geely Automobile Research & Development Co. Ltd., Hangzhou Bay New District Ningbo 315336 (CN)
(72) Inventor: BRANDIN, Magnus, 435 38 MÖLNLYCKE (SE); BÖLANDER, Markus, 411 19 GÖTEBORG (SE); SÖDERLUND, Markus, 443 51 LERUM (SE)
(74) Representative: Zacco Sweden AB

(56) References cited:
- GB-A- 2 558 051
- US-A1- 2014 107 867
- US-A1- 2014 316 671
- US-A1- 2017 011 633
- US-A1- 2018 082 590
- US-A1- 2019 035 269

## Description

### TECHNICAL FIELD

The invention relates to a method for sorting vehicles of vehicle platoons and a control arrangement for controlling vehicles of vehicle platoons.

### BACKGROUND

In a traffic system comprising vehicle platoons, where each vehicle platoon has a lead vehicle and a plurality of following vehicles driving in a convoy after the lead vehicle, there is a need for individual vehicles to change from one vehicle platoon to another vehicle platoon for reaching the planned destination. The connection and disconnection of vehicles to/from a vehicle platoon should however be performed without disturbances leading to delays and longer driving times.

Document GB2558051 describes how to control vehicles of platoons before a roundabout to make it possible for the vehicles to reach the intended destinations. A lane shift of a vehicle belonging to a first platoon into a second platoon driving in an adjacent lane is described. For enabling the vehicle to move from the left lane to the right lane an increased distance, corresponding to the size of a vehicle, between two vehicles in the platoon driving in the right lane is created. Thereafter, the vehicle can shift from the left lane to the right lane.

### SUMMARY

An objective of the invention is to provide a method for sorting vehicles of vehicle platoons, by which method connection and disconnection of vehicles to/from a vehicle platoon can be performed in an efficient way.

The objective is achieved by a method for sorting vehicles of vehicle platoons according to claim 1.

The invention is based on the insight that by such method, vehicles having same planned destination but initially are driving in different vehicle platoons can join the same vehicle platoon while keeping a significant velocity of the vehicle platoons, and then continue towards the planned destination.

According to one embodiment of the method, the method comprises the steps of repositioning the first vehicle platoon and the second vehicle platoon relative to each other such that a rear end of the first vehicle platoon is in front of said at least one following vehicle of the second vehicle platoon, controlling said at least one following vehicle of the second platoon to change from the second lane to the first lane and join the first vehicle platoon at the rear end of the first vehicle platoon. Hereby, the energy consumption can be kept low at the same time as the sorting of vehicles can be performed in a relatively short time.

According to a further embodiment, the method comprises the steps of performing the lane change of said at least one following vehicle of the first vehicle platoon, and thereafter the lane change of said at least one following vehicle of the second vehicle platoon, during an overtaking where the first vehicle platoon passes the second vehicle platoon. Hereby, no additional braking consuming energy is required for performing sorting of the vehicles.

According to another aspect of the invention, a further objective is to provide a control arrangement for controlling vehicles of vehicle platoons, by which control arrangement connection and disconnection of vehicles to/from a vehicle platoon can be performed in an efficient way.

This objective is achieved by a control arrangement for controlling vehicles of vehicle platoons according to claim 3.

The advantages of the control arrangement are similar to the advantages already discussed hereinabove with reference to the different embodiments of the method. Further advantages and advantageous features of the invention are disclosed in the following description and in the claims.

### BRIEF DESCRIPTION OF THE DRAWINGS

With reference to the appended drawings, below follows a more detailed description of embodiments of the invention cited as examples.

In the drawings:
Fig. 1 shows a vehicle platoon,
Fig. 2 shows two vehicle platoons driving in different lanes,
Fig. 3 is a map showing some routes for vehicle platoons,
Figs. 4a, 4b, 4c and 4b show a road segment and an example embodiment of sorting following vehicles of two vehicle platoons, and
Figs. 5a, 5b, 5c and 5d show a road segment and a further example embodiment of sorting following vehicles of two vehicle platoons.

### DETAILED DESCRIPTION OF EXAMPLE EMBODIMENTS

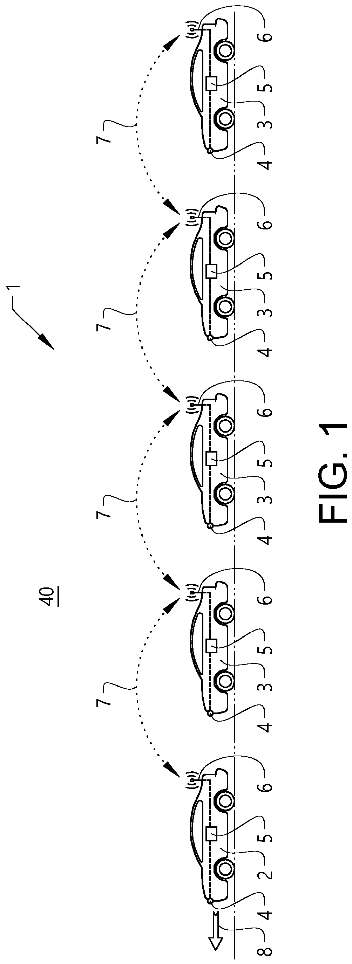

Fig. 1 shows a vehicle platoon 1 having a lead vehicle 2 and a plurality of following vehicles 3. The lead vehicle 2 and the following vehicles 3 are individual vehicles but driven together as a group or convoy. The following vehicles 3 are positioned in a line after the lead vehicle 2. The driving direction is indicated with an arrow 8. The lead vehicle 2 can be a so called autonomous or self-driving vehicle, or the lead vehicle 2 can be at least partly controlled by an operator of the lead vehicle. The following vehicles 3 of the vehicle platoon are suitably automatically controlled without any driver assistance.

When driving in the vehicle platoon 1, the following vehicles 3 are controlled to follow the lead vehicle 2 or the vehicle closest to the front, such that when the speed of the lead vehicle 2 is increased/decreased the speed of the following vehicles 3 is increased/decreased correspondingly for maintaining or achieving the desired distances and time gaps between the vehicles. Further, when the lead vehicle 2 is changing driving direction, a following vehicle 3 will also change driving direction and follow the lead vehicle or rather the vehicle closest to the front.

For enabling the vehicles 2, 3 to be controlled, each vehicle can be provided with any suitable sensor equipment 4 for receiving information about the environment, and a control unit 5 for controlling the vehicle. The sensor equipment gives information about at least the vehicle closest to the front, but preferably the sensor equipment is covering 360 degrees around the vehicle for obtaining the information that is required for longitudinal and lateral control of the vehicle. Such sensor equipment 4 may comprise lidar, radar and ultrasonic sensors, cameras, etc. The information received by the sensor equipment is used by the control unit 5 for controlling the driving behaviour of the vehicle. In addition, maps, GPS, etc., can be used for determining the current position of a vehicle platoon or an individual vehicle of a vehicle platoon.

Alternatively or in addition to the sensor equipment 4, each vehicle 2, 3 is provided with a communication unit 6 for communicating with one or more of the other vehicles of the vehicle platoon 1. Such a communication unit 6 may comprise any suitable components for establish communication between the vehicles. For example, the communication unit 6 may comprise a transmitter and a receiver based on radio waves or microwaves. In other words, each vehicle can be part of a local network for communication 7 between the vehicles of the vehicle platoon 1. By means of the local network, control signals can be transmitted from one vehicle to another vehicle. The control signals received are then used by the control unit 5 arranged on the vehicle for controlling the driving behaviour of the vehicle. Such control signals received by the following vehicles 3 are preferably at least initially transmitted by the lead vehicle 2.

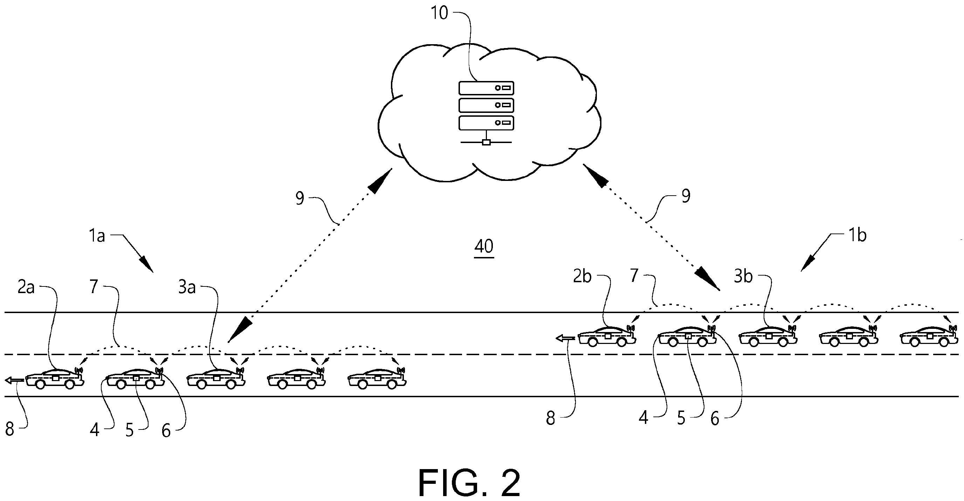

Fig. 2 shows two vehicle platoons 1a, 1b driving in different lanes of a road. Each vehicle platoon 1a, 1b of the current traffic system is also part of a central network for communication 9 between the vehicle platoon 1a, 1b and a central control unit 10. By means of the central network, control signals can be transmitted from the central control unit 10 to a vehicle platoon 1a, 1b for controlling the driving behaviour of the vehicle platoon. Such control signals are preferably received by the lead vehicle 2a, 2b of the vehicle platoon, but could also be received by one or more of the following vehicles 3 of the vehicle platoon. The central control unit 10 can be part of a server of a wireless network, such as Internet, for cloud computing.

The central control unit 10 and the local control unit 5 arranged on a vehicle may comprise one or more microprocessors and/or one or more memory devices or any other components for executing computer programs to perform the method described hereinafter. Thus, the central control unit and/or the local control unit is preferably provided with a computer program comprising program code means for performing the steps of any example embodiment of the method described hereinafter.

For controlling a vehicle platoon or an individual vehicle of the vehicle platoon when a vehicle is to change from one vehicle platoon to another vehicle platoon, preferably both the control unit 5 of the vehicle and the central control unit 10 are used in cooperation. Alternatively or in addition to what has been described hereinabove, sensors can be arranged in the environment to the current road where the vehicle platoons are driven. These sensors may provide information received by the control unit 5 and/or the central control unit 10. Such sensors could be a complement to the sensors of the vehicles, giving further information and/or redundancy to the system.

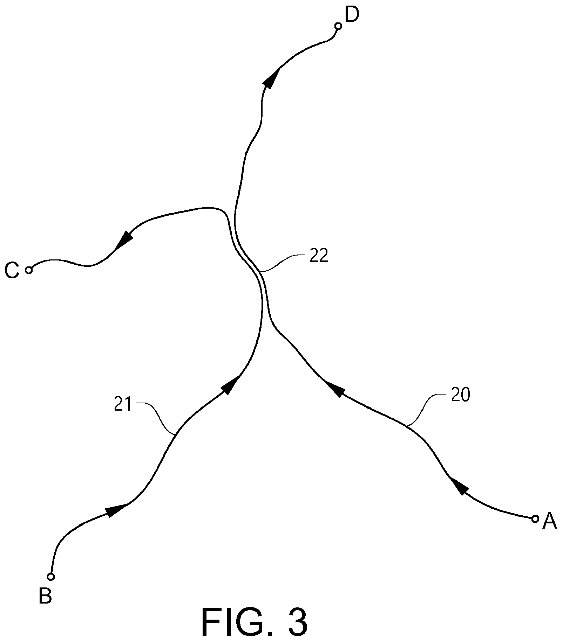

Fig. 3 is a simplified map showing some routes for vehicle platoons. In this example, a first vehicle platoon is driving from position A to position D along a first route 20, and a second vehicle platoon is driving from position B to position C along a second route 21. The first route 20 and the second route 21 have a road segment 22 in common. In this case, some following vehicles of the first vehicle platoon could however have position C as final destination, and some following vehicles of the second vehicle platoon could have position D as final destination.

When describing the method hereinafter, reference to Figs. 1-3 will be made.

The method comprises the steps of providing the first vehicle platoon 1a driving along the first route 20 and the second vehicle platoon 1b driving along the second route 21. As previously described hereinabove, the first vehicle platoon 1a comprises a lead vehicle 2a and a plurality of following vehicles 3 and the second vehicle platoon 1b comprises a lead vehicle 2b and a plurality of following vehicles 3. The method further comprises the steps of selecting the road segment 22 in common to the first route 20 and the second route 21, and controlling at least one following vehicle 3a of the first vehicle platoon 1a to leave the first vehicle platoon and join the second vehicle platoon 1b, and and/or controlling at least one following vehicle 3b of the second vehicle platoon 1b to leave the second vehicle platoon and join the first vehicle platoon 1a, while driving the first vehicle platoon 1a and the second vehicle platoon 1b along said road segment 22.

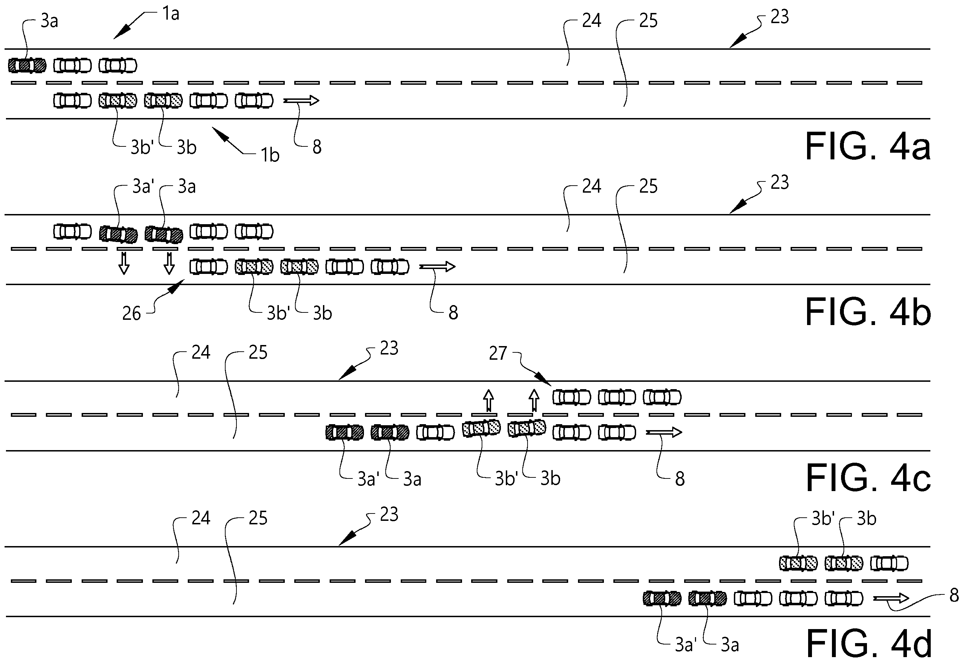

Figs. 4a, 4b, 4c and 4d show an example embodiment of the method where sorting of vehicles is performed during overtaking. These figures show a part of the road segment 22 in common to the first route 20 and the second route 21. The road 23 of the road segment 22 comprises a first lane 24 and a second lane 25, which lanes preferably are dedicated for vehicle platoons only.

In the example embodiment illustrated in Figs. 4a-4d, the method comprises the steps of driving the first vehicle platoon 1a in the first lane 24 of the road segment 22 and driving the second vehicle platoon 1b in the second lane 25 of the road segment 22, and positioning the first vehicle platoon 1a and the second vehicle platoon 1b relative to each other such that a rear end 26 of the second vehicle platoon 1b is in front of said at least one following vehicle 3a of the first vehicle platoon 1a, and controlling said at least one following vehicle 3a of the first vehicle platoon 1a to change from the first lane 24 to the second lane 25 and join the second vehicle platoon 1b at the rear end 26 of the second vehicle platoon 1b.

As indicated in Figs. 4a and 4b, two following vehicles 3a, 3a' of the first vehicle platoon 1a are disconnecting from the first vehicle platoon 1a and changing from the first lane 24 to the second lane 25 for connecting to the second vehicle platoon 1b. These following vehicles 3a, 3a' are dark grey for illustration purposes only. The wording "connecting" and "disconnecting" to/from a vehicle platoon used herein, is referring to which lead vehicle the following vehicle will follow and the connection to any local network associated with the current vehicle platoon. The vehicles of the vehicle platoon are however individually driven vehicles as previously described hereinabove, though driven together as a group or convoy.

The method further comprises the steps of repositioning the first vehicle platoon 1a and the second vehicle platoon 1b relative to each other such that a rear end 27 of the first vehicle platoon 1a is in front of said at least one following vehicle 3b of the second vehicle platoon 1b, controlling said at least one following vehicle 3b of the second platoon 1b to change from the second lane 25 to the first lane 24 and join the first vehicle platoon 1a at the rear end 27 of the first vehicle platoon 1a.

As indicated in Figs. 4c and 4d, two following vehicles 3b, 3b' of the second vehicle platoon 1b are disconnecting from the second vehicle platoon 1b and changing from the second lane 25 to the first lane 24 for connecting to the first vehicle platoon 1a. These following vehicles 3b, 3b' are grey for illustration purposes only.

The method can comprise the step of performing the lane change of said at least one following vehicle 3a of the first vehicle platoon 1a, and thereafter the lane change of said at least one following vehicle 3b of the second vehicle platoon 1b, during an overtaking where the first vehicle platoon 1a passes the second vehicle platoon 1b. In the example embodiment illustrated in Figs. 4a-4d, during the sorting operation of the following vehicles the first vehicle platoon 1a has performed an overtaking relative to the second vehicle platoon 1b. After the sorting operation has been performed, the first vehicle platoon 1a and the second vehicle platoon 1b can proceed towards their destinations, as indicated in Fig. 4d.

It should be stressed that the sorting operations described herein are preferably performed by controlling the vehicles by means of the equipment and control units described with reference to Figs. 1 and 2, without any assistance from any driver of any of the vehicles.

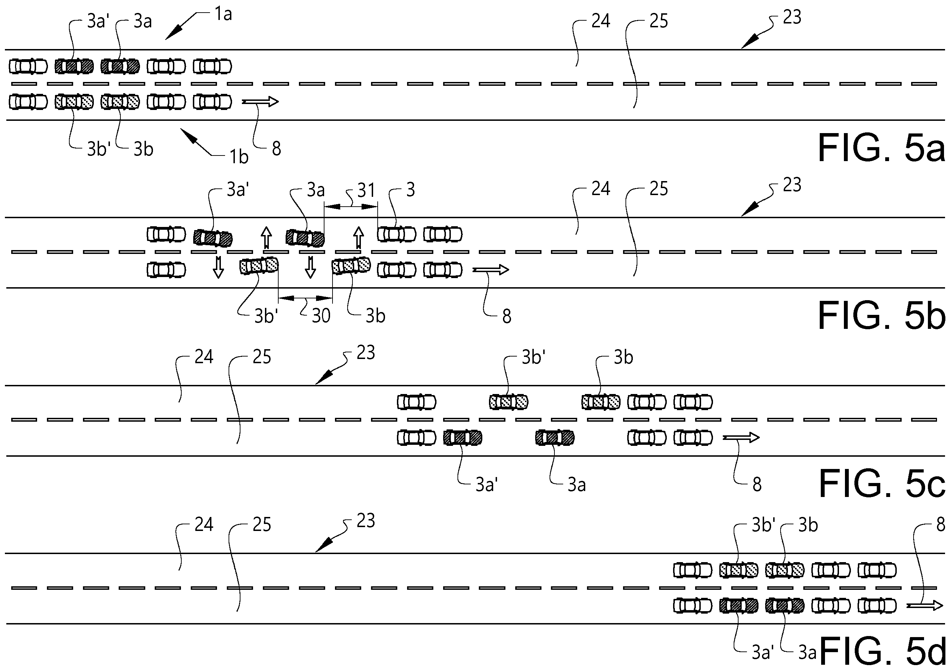

Figs. 5a, 5b, 5c and 5d show another example embodiment of the method where sorting of vehicles is performed by zipper merging. These figures show a part of the road segment 22 in common to the first route 20 and the second route 21. The road 23 of the road segment 22 comprises the first lane 24 and the second lane 25, which lanes preferably are dedicated for vehicle platoons only.

In the example embodiment illustrated in Figs. 5a-5d, the method comprises the steps of driving the first vehicle platoon 1a in the first lane 24 of the road segment 22 and driving the second vehicle platoon 1b in the second lane 25 of the road segment 22, side by side, providing a distance 30 between a first following vehicle 3b and a second following vehicle 3b' of the second vehicle platoon 1b, for receiving a following vehicle 3a therebetween at a position corresponding to the longitudinal position (in the driving direction 8) of said at least one following vehicle 3a of the first vehicle platoon 1a, and controlling said at least one following vehicle 3a of the first vehicle platoon 1a to change from the first lane 24 to the second lane 25 and join the second vehicle platoon 1b between the first following vehicle 3b and the second following vehicle 3b' of the second vehicle platoon 1b.

As indicated in Figs. 5a and 5b, two following vehicles 3a, 3a' of the first vehicle platoon 1a are disconnecting from the first vehicle platoon 1a and changing from the first lane 24 to the second lane 25 for connecting to the second vehicle platoon 1b. These following vehicles 3a, 3a' are dark grey for illustration purposes only.

The method can also comprise the steps of providing a distance 31 between a first following vehicle 3 and a second following vehicle 3a of the first vehicle platoon 1a, for receiving a following vehicle 3b therebetween at a position corresponding to the longitudinal position (in the driving direction 8) of said at least one following vehicle 3b of the second vehicle platoon 1b, controlling said at least one following vehicle 3b of the second vehicle platoon 1b to change from the second lane 25 to the first lane 24 and join the first vehicle platoon 1a between the first following vehicle 3 and the second following vehicle 3a of the first vehicle platoon 1a.

The distances 30, 31 are adapted to the size of the vehicles and the time gap between the vehicles for performing the lane shift.

As also indicated in Figs. 5a and 5b, two following vehicles 3b, 3b' of the second vehicle platoon 1b are disconnecting from the second vehicle platoon 1b and changing from the second lane 25 to the first lane 24 for connecting to the first vehicle platoon 1a. These following vehicles 3b, 3b' are grey for illustration purposes only.

The method can comprise the step of performing the lane change of said at least one following vehicle 3a of the first vehicle platoon 1a and the lane change of said at least one following vehicle 3b of the second vehicle platoon 1b by zipper merging said at least one following vehicle 3a of the first vehicle platoon 1a and said at least one following vehicle 3b of the second vehicle platoon 1b. In the example embodiment illustrated in Figs. 5a-5d, during the sorting operation of the following vehicles, two following vehicles 3a, 3a' of the first vehicle platoon 1a and two following vehicles 3b, 3b' of the second platoon 1b have been controlled to perform a zipper merge operation. After the sorting operation has been performed, the first vehicle platoon 1a and the second vehicle platoon 1b can proceed side by side towards their destinations, as indicated in Fig. 5d.

The invention also relates a control arrangement 40 for controlling vehicles of vehicle platoons. When describing the control arrangement 40 hereinafter, reference is made to previously described figures, particularly Figs. 1 and 2.

The control arrangement 40 preferably comprises one or more of the central control unit 10, control units 5 and communication units 6 arranged on the vehicles, and the sensor equipment 4 of the vehicles. For example, the central control unit 10 is suitably used for selecting the road segment 22, and the first vehicle platoon 1a and the second vehicle platoon 1b, between which vehicle platoons 1a, 1b one or more following vehicles are to be switched.

In analogy to what is described hereinabove as it regards the method, the control arrangement is configured to control the vehicle platoons 1a, 1b accordingly.

The control arrangement 40 is configured to select the road segment 22 in common to the first route 20 and the second route 21, and to control at least one following vehicle 3a of the first vehicle platoon 1a to leave the first vehicle platoon 1a and join the second vehicle platoon 1b, and control at least one following vehicle 3b of the second vehicle platoon 1b to leave the second vehicle platoon 1b and join the first vehicle platoon 1a, while the first vehicle platoon 1a and the second vehicle platoon 1b are driving along said road segment 22.

The control arrangement 40 can be configured to control the first vehicle platoon 1a driving in a first lane 24 of the road segment 22 and the second vehicle platoon 1b driving in a second lane 25 of the road segment 22, thereby positioning the first vehicle platoon 1a and the second vehicle platoon 1b relative to each other such that a rear end 26 of the second vehicle platoon 1b is in front of said at least one following vehicle 3a of the first vehicle platoon 1a, and to control said at least one following vehicle 3a of the first vehicle platoon 1a to change from the first lane 24 to the second lane 25 and join the second vehicle platoon 1b at the rear end 26 of the second vehicle platoon 1b.

Correspondingly, the control arrangement 40 can be configured to control the first vehicle platoon 1a and the second vehicle platoon 1b for repositioning the first vehicle platoon 1a and the second vehicle platoon 1b relative to each other such that a rear end 27 of the first vehicle platoon 1a is in front of said at least one following vehicle 3b of the second vehicle platoon 1b, and to control said at least one following vehicle 3b of the second vehicle platoon 1b to change from the second lane 25 to the first lane 24 and join the first vehicle platoon 1a at the rear end 27 of the first vehicle platoon 1a.

Further, the control arrangement 40 can be configured to control the first vehicle platoon 1a driving in a first lane 24 of the road segment 22 and control the second vehicle platoon 1b driving in a second lane 25 of the road segment 22, and to control a first following vehicle 3b and a second following vehicle 3b' of the second vehicle platoon 1b, thereby providing a distance 30 between the first following vehicle 3b and the second following vehicle 3b' of the second vehicle platoon 1b, for receiving a following vehicle 3a therebetween at a position corresponding to the longitudinal position (in the driving direction 8) of said at least one following vehicle 3a of the first vehicle platoon 1a, and configured to control said at least one following vehicle 3a of the first vehicle platoon 1a to change from the first lane 24 to the second lane 25 and join the second vehicle platoon 1b between the first following vehicle 3b and the second following vehicle 3b' of the second vehicle platoon 1b.

Correspondingly, the control arrangement 40 can be configured to control a first following vehicle 3 and a second following vehicle 3a of the first vehicle platoon 1a, thereby providing a distance 31 between the first following vehicle 3 and the second following vehicle 3a of the first vehicle platoon 1a, for receiving a following vehicle 3b therebetween at a position corresponding to the longitudinal position (in the driving direction 8) of said at least one following vehicle 3b of the second vehicle platoon 1b, and configured to control said at least one following vehicle 3b of the second vehicle platoon 1b to change from the second lane 25 to the first lane 24 and join the first vehicle platoon 1a between the first following vehicle 3 and the second following vehicle 3a of the first vehicle platoon 1a.

It is to be understood that the present invention is not limited to the embodiments described above and illustrated in the drawings; rather, the skilled person will recognize that many changes and modifications may be made within the scope of the appended claims.

## Claims

1. A method for sorting vehicles of vehicle platoons, allowing said vehicles having the same planned destination but initially driving in different vehicle platoons to join the same vehicle platoon while keeping a significant velocity of the vehicle platoons and then continue towards the planned destination, comprising the steps of providing a first vehicle platoon (1a) driving along a first route (20) and a second vehicle platoon (1b) driving along a second route (21), the first vehicle platoon (1a) comprising a lead vehicle (2a) and a plurality of following vehicles (3) and the second vehicle platoon comprising a lead vehicle (2b) and a plurality of following vehicles (3), selecting a road segment (22) in common to the first route (20) and the second route (21), controlling at least one following vehicle (3a) of the first vehicle platoon (1a) to leave the first vehicle platoon and join the second vehicle platoon (1b) **and** controlling at least one following vehicle (3b) of the second vehicle platoon (1b) to leave the second vehicle platoon and join the first vehicle platoon (1a) while driving the first vehicle platoon (1a) and the second vehicle platoon (1 b) along said road segment (22),by driving the first vehicle platoon (1a) in a first lane (24) of the road segment (22) and driving the second vehicle platoon (1 b) in a second lane (25) of the road segment (22), and positioning the first vehicle platoon (1a) and the second vehicle platoon (1b) relative to each other such that a rear end (26) of the second vehicle platoon (1 b) is in front of said at least one following vehicle (3a) of the first vehicle platoon (1a), controlling said at least one following vehicle (3a) of the first vehicle platoon (1 a) to change from the first lane (24) to the second lane (25) and join the second vehicle platoon (1 b) at the rear end (26) of the second vehicle platoon (1b), repositioning the first vehicle platoon (1a) and the second vehicle platoon (1b) relative to each other such that a rear end (27) of the first vehicle platoon (1a) is in front of said at least one following vehicle (3b) of the second vehicle platoon (1 b), and controlling said at least one following vehicle (3b) of the second platoon (1 b) to change from the second lane (25) to the first lane (24) and join the first vehicle platoon (1a) at the rear end (27) of the first vehicle platoon (1a).

2. method according to claim 1
**characterized by** performing the lane change of said at least one following vehicle (3a) of the first vehicle platoon (1a), and thereafter the lane change of said at least one following vehicle (3b) of the second vehicle platoon (1b), during an overtaking where the first vehicle platoon (1a) passes the second vehicle platoon (1b).

3. A control arrangement (40) for controlling vehicles of vehicle platoons, allowing said vehicles having the same planned destination but initially driving in different vehicle platoons to join the same vehicle platoon while keeping a significant velocity of the vehicle platoons and then continue towards the planned destination, the vehicle platoons comprising a first vehicle platoon (1a) driving along a first route (20) and a second vehicle platoon (1b) driving along a second route (21), the first vehicle platoon (1a) comprising a lead vehicle (2a) and a plurality of following vehicles (3) and the second vehicle platoon (1b) comprising a lead vehicle (2b) and a plurality of following vehicles (3), the control arrangement (40) being configured to select a road segment (22) in common to the first route (20) and the second route (21), to control at least one following vehicle (3a) of the first vehicle platoon (1a) to leave the first vehicle platoon and join the second vehicle platoon (1b) **and** control at least one following vehicle (3b) of the second vehicle platoon (1b) to leave the second vehicle platoon and join the first vehicle platoon (1a) while driving the first vehicle platoon (1a) and the second vehicle platoon (1 b) along said road segment (22), by driving the first vehicle platoon (1a) in a first lane (24) of the road segment (22) and driving the second vehicle platoon (1b) in a second lane (25) of the road segment (22), and positioning the first vehicle platoon (1a) and the second vehicle platoon (1b) relative to each other such that a rear end (26) of the second vehicle platoon (1b) is in front of said at least one following vehicle (3a) of the first vehicle platoon (1a), controlling said at least one following vehicle (3a) of the first vehicle platoon (1a) to change from the first lane (24) to the second lane (25) and join the second vehicle platoon (1b) at the rear end (26) of the second vehicle platoon (1b), repositioning the first vehicle platoon (1a) and the second vehicle platoon (1b) relative to each other such that a rear end (27) of the first vehicle platoon (1a) is in front of said at least one following vehicle (3b) of the second vehicle platoon (1b), and controlling said at least one following vehicle (3b) of the second platoon (1b) to change from the second lane (25) to the first lane (24) and join the first vehicle platoon (1a) at the rear end (27) of the first vehicle platoon (1a). 25

4. A control arrangement according to claim 3 **characterized in that** the control arrangement (40) is configured to control said at least one following vehicle (3a) of the first vehicle platoon (1a) to perform the lane change, and thereafter control said at least one following vehicle (3b) of the second vehicle platoon (1b) to perform the lane change, during an overtaking where the first vehicle platoon (1a) passes the second vehicle platoon (1b).

5. A computer program comprising program code which, when the program code is executed by a computer, cause the computer to carry out the method according to any of claims 1-3.

## Patentansprüche

1. Verfahren zum Sortieren von Fahrzeugen von Fahrzeugkolonnen, das es ermöglicht, dass die Fahrzeuge, die dasselbe geplante Ziel aufweisen, aber anfangs in unterschiedlichen Fahrzeugkolonnen fahren, sich derselben Fahrzeugkolonne anschließen, während eine signifikante Geschwindigkeit der Fahrzeugkolonnen beibehalten wird, und dann in Richtung des geplanten Ziels weiterfahren,
umfassend die folgenden Schritte:
Bereitstellen einer ersten Fahrzeugkolonne (1a), die entlang einer ersten Route (20) fährt, und einer zweiten Fahrzeugkolonne (1b), die entlang einer zweiten Route (21) fährt, wobei die erste Fahrzeugkolonne (1a) ein führendes Fahrzeug (2a) und eine Vielzahl von folgenden Fahrzeugen (3) umfasst und die zweite Fahrzeugkolonne ein führendes Fahrzeug (2b) und eine Vielzahl von folgenden Fahrzeugen (3) umfasst, Auswählen eines Straßensegments (22), das die erste Route (20) und die zweite Route (21) gemeinsam aufweisen, Steuern mindestens eines folgenden Fahrzeugs (3a) der ersten Fahrzeugkolonne (1a) dahingehend, dass es die erste Fahrzeugkolonne verlässt und sich der zweiten Fahrzeugkolonne (1b) anschließt, und Steuern mindestens eines folgenden Fahrzeugs (3b) der zweiten Fahrzeugkolonne (1b) dahingehend, dass es die zweite Fahrzeugkolonne verlässt und sich der ersten Fahrzeugkolonne (1a) anschließt, während die erste Fahrzeugkolonne (1a) und die zweite Fahrzeugkolonne (1b) entlang des Straßensegments (22) fahren, indem die erste Fahrzeugkolonne (1a) auf einem ersten Fahrstreifen (24) des Straßensegments (22) fährt und die zweite Fahrzeugkolonne (1b) auf einem zweiten Fahrstreifen (25) des Straßensegments (22) fährt und die erste Fahrzeugkolonne (1a) und die zweite Fahrzeugkolonne (1b) relativ zu einander derart positioniert werden, dass sich ein hinteres Ende (26) der zweiten Fahrzeugkolonne (1b) vor dem mindestens einen folgenden Fahrzeug (3a) der ersten Fahrzeugkolonne (1a) befindet, das mindestens eine folgende Fahrzeug (3a) der ersten Fahrzeugkolonne (1a) dahingehend gesteuert wird, dass es von dem ersten Fahrstreifen (24) auf den zweiten Fahrstreifen (25) wechselt und sich der zweiten Fahrzeugkolonne (1b) an dem hinteren Ende (26) der zweiten Fahrzeugkolonne (1b) anschließt, die erste Fahrzeugkolonne (1a) und die zweite Fahrzeugkolonne (1b) relativ zueinander derart neu positioniert werden, dass sich ein hinteres Ende (27) der ersten Fahrzeugkolonne (1a) vor dem mindestens einen folgenden Fahrzeug (3b) der zweiten Fahrzeugkolonne (1b) befindet, und das mindestens eine folgende Fahrzeug (3b) der zweiten Kolonne (1b) dahingehend gesteuert wird, dass es von dem zweiten Fahrstreifen (25) auf den ersten Fahrstreifen (24) wechselt und sich der ersten Fahrzeugkolonne (1a) an dem hinteren Ende (27) der ersten Fahrzeugkolonne (1a) anschließt.

2. Verfahren nach Anspruch 1,
**gekennzeichnet durch** Durchführen des Fahrstreifenwechsels des mindestens einen folgenden Fahrzeugs (3a) der ersten Fahrzeugkolonne (1a) und danach des Fahrstreifenwechsels des mindestens einen folgenden Fahrzeugs (3b) der zweiten Fahrzeugkolonne (1b) während eines Überholvorgangs, bei dem die erste Fahrzeugkolonne (1a) an der zweiten Fahrzeugkolonne (1b) vorbeifährt.

3. Steueranordnung (40) zum Steuern von Fahrzeugen von Fahrzeugkolonnen, die es ermöglicht, dass die Fahrzeuge, die dasselbe geplante Ziel aufweisen, aber anfangs in unterschiedlichen Fahrzeugkolonnen fahren, sich derselben Fahrzeugkolonne anschließen, während eine signifikante Geschwindigkeit der Fahrzeugkolonnen beibehalten wird, und dann in Richtung des geplanten Ziels weiterfahren, wobei die Fahrzeugkolonnen eine erste Fahrzeugkolonne (1a), die entlang einer ersten Route (20) fährt, und eine zweite Fahrzeugkolonne (1b), die entlang einer zweiten Route (21) fährt, umfassen, wobei die erste Fahrzeugkolonne (1a) ein führendes Fahrzeug (2a) und eine Vielzahl von folgenden Fahrzeugen (3) umfasst und die zweite Fahrzeugkolonne (1b) ein führendes Fahrzeug (2b) und eine Vielzahl von folgenden Fahrzeugen (3) umfasst, wobei die Steueranordnung (40) dazu konfiguriert ist, ein Straßensegment (22) auszuwählen, das die erste Route (20) und die zweite Route (21) gemeinsam aufweisen, mindestens ein folgendes Fahrzeug (3a) der ersten Fahrzeugkolonne (1a) dahingehend zu steuern, dass es die erste Fahrzeugkolonne verlässt und sich der zweiten Fahrzeugkolonne (1b) anschließt, und mindestens ein folgendes Fahrzeug (3b) der zweiten Fahrzeugkolonne (1b) dahingehend zu steuern, dass es die zweite Fahrzeugkolonne verlässt und sich der ersten Fahrzeugkolonne (1a) anschließt, während die erste Fahrzeugkolonne (1a) und die zweite Fahrzeugkolonne (1b) entlang des Straßensegments (22) fahren, indem die erste Fahrzeugkolonne (1a) auf einem ersten Fahrstreifen (24) des Straßensegments (22) fährt und die zweite Fahrzeugkolonne (1b) auf einem zweiten Fahrstreifen (25) des Straßensegments (22) fährt und die erste Fahrzeugkolonne (1a) und die zweite Fahrzeugkolonne (1b) relativ zu einander derart positioniert werden, dass sich ein hinteres Ende (26) der zweiten Fahrzeugkolonne (1b) vor dem mindestens einen folgenden Fahrzeug (3a) der ersten Fahrzeugkolonne (1a) befindet, das mindestens eine folgende Fahrzeug (3a) der ersten Fahrzeugkolonne (1a) dahingehend gesteuert wird, dass es von dem ersten Fahrstreifen (24) auf den zweiten Fahrstreifen (25) wechselt und sich der zweiten Fahrzeugkolonne (1b) an dem hinteren Ende (26) der zweiten Fahrzeugkolonne (1b) anschließt, die erste Fahrzeugkolonne (1a) und die zweite Fahrzeugkolonne (1b) relativ zueinander derart neu positioniert werden, dass sich ein hinteres Ende (27) der ersten Fahrzeugkolonne (1a) vor dem mindestens einen folgenden Fahrzeug (3b) der zweiten Fahrzeugkolonne (1b) befindet, und das mindestens eine folgende Fahrzeug (3b) der zweiten Kolonne (1b) dahingehend gesteuert wird, dass es von dem zweiten Fahrstreifen (25) auf den ersten Fahrstreifen (24) wechselt und sich der ersten Fahrzeugkolonne (1a) an dem hinteren Ende (27) der ersten Fahrzeugkolonne (1a) anschließt.

4. Steueranordnung nach Anspruch 3,
**dadurch gekennzeichnet, dass** die Steueranordnung (40) dazu konfiguriert ist, das mindestens eine folgende Fahrzeug (3a) der ersten Fahrzeugkolonne (1a) dahingehend zu steuern, dass es den Fahrstreifenwechsel durchführt, und danach das mindestens eine folgende Fahrzeug (3b) der zweiten Fahrzeugkolonne (1b) dahingehend zu steuern, dass es den Fahrstreifenwechsel während eines Überholvorgangs durchführt, bei dem die erste Fahrzeugkolonne (1a) an der zweiten Fahrzeugkolonne (1b) vorbeifährt.

5. Computerprogramm, umfassend Programmcode, der, wenn der Programmcode durch einen Computer ausgeführt wird, den Computer dazu veranlasst, das Verfahren nach einem der Ansprüche 1-3 auszuführen.

## Revendications

1. Procédé de tri de véhicules de pelotons de véhicules, permettant auxdits véhicules ayant la même destination prévue mais circulant initialement dans des pelotons de véhicules différents de rejoindre un même peloton de véhicules tout en gardant une vitesse significative des pelotons de véhicules puis de poursuivre vers la destination prévue, comprenant les étapes de fourniture d'un premier peloton de véhicules (1a) circulant le long d'un premier itinéraire (20) et d'un second peloton de véhicules (1b) circulant le long d'un second itinéraire (21), le premier peloton de véhicules (1a) comprenant un véhicule de tête (2a) et une pluralité de véhicules suivants (3) et le second peloton de véhicules comprenant un véhicule de tête (2b) et une pluralité de véhicules suivants (3), la sélection d'un segment de route (22) commun au premier itinéraire (20) et au second itinéraire (21), le contrôle d'au moins un véhicule suivant (3a) du premier peloton de véhicules (1a) pour quitter le premier peloton de véhicules et rejoindre le second peloton de véhicules (1b) et le contrôle d'au moins un véhicule suivant (3b) du second peloton de véhicules (1b) pour quitter le second peloton de véhicules et rejoindre le premier peloton de véhicules (1a) tout en conduisant le premier peloton de véhicules (1a) et le second peloton de véhicules (1b) le long dudit segment de route (22), en conduisant le premier peloton de véhicules (1a) dans une première voie (24) du segment de route (22) et en conduisant le second peloton de véhicules (1b) dans une seconde voie (25) du segment de route (22), et le positionnement du premier peloton de véhicules (1a) et du second peloton de véhicules (1b) l'un par rapport à l'autre de telle sorte qu'une extrémité arrière (26) du second peloton de véhicules (1b) se retrouve devant ledit au moins un véhicule suivant (3a) du premier peloton de véhicules (1a), le contrôle dudit au moins un véhicule suivant (3a) du premier peloton de véhicules (1a) pour passer de la première voie (24) à la seconde voie (25) et rejoindre le second peloton de véhicules (1b) à l'extrémité arrière (26) du second peloton de véhicules (1b), le repositionnement du premier peloton de véhicules (1a) et le second peloton de véhicules (1b) l'un par rapport à l'autre de telle sorte qu'une extrémité arrière (27) du premier peloton de véhicules (1a) se retrouve devant ledit au moins un véhicule suivant (3b) du second peloton de véhicules (1b), et le contrôle dudit au moins un véhicule suivant (3b) du second peloton (1b) pour passer de la seconde voie (25) à la première voie (24) et rejoindre le premier peloton de véhicules (1a) à l'extrémité arrière (27) du premier peloton de véhicules (1a).

2. Procédé selon la revendication 1, **caractérisé par** la réalisation du changement de voie dudit au moins un véhicule suivant (3a) du premier peloton de véhicules (1a), puis le changement de voie dudit au moins un véhicule suivant (3b) du second peloton de véhicules (1b), lors d'un dépassement où le premier peloton de véhicules (1a) dépasse le second peloton de véhicules (1b).

3. Régime de contrôle (40) destiné à contrôler des véhicules de pelotons de véhicules, permettant auxdits véhicules ayant la même destination prévue mais circulant initialement dans des pelotons de véhicules différents de rejoindre un même peloton de véhicules tout en gardant une vitesse significative des pelotons de véhicules puis de poursuivre vers la destination prévue, les pelotons de véhicules comprenant un premier peloton de véhicules (1a) circulant le long d'un premier itinéraire (20) et d'un second peloton de véhicules (1b) circulant le long d'un second itinéraire (21), le premier peloton de véhicules (1a) comprenant un véhicule de tête (2a) et une pluralité de véhicules suivants (3) et le second peloton de véhicules comprenant un véhicule de tête (2b) et une pluralité de véhicules suivants (3), le régime de contrôle (40) étant conçu pour sélectionner un segment de route (22) commun au premier itinéraire (20) et au second itinéraire (21), contrôler au moins un véhicule suivant (3a) du premier peloton de véhicules (1a) pour quitter le premier peloton de véhicules et rejoindre le second peloton de véhicules (1b) et contrôler au moins un véhicule suivant (3b) du second peloton de véhicules (1b) pour quitter le second peloton de véhicules et rejoindre le premier peloton de véhicules (1a) tout en conduisant le premier peloton de véhicules (1a) et le second peloton de véhicules (1b) le long dudit segment de route (22), en conduisant le premier peloton de véhicules (1a) dans une première voie (24) du segment de route (22) et en conduisant le second peloton de véhicules (1b) dans une seconde voie (25) du segment de route (22), et positionner le premier peloton de véhicules (1a) et le second peloton de véhicules (1b) l'un par rapport à l'autre de telle sorte qu'une extrémité arrière (26) du second peloton de véhicules (1b) se retrouve devant ledit au moins un véhicule suivant (3a) du premier peloton de véhicules (1a), contrôler ledit au moins un véhicule suivant (3a) du premier peloton de véhicules (1a) pour passer de la première voie (24) à la seconde voie (25) et rejoindre le second peloton de véhicules (1b) à l'extrémité arrière (26) du second peloton de véhicules (1b), repositionner le premier peloton de véhicules (1a) et le second peloton de véhicules (1b) l'un par rapport à l'autre de telle sorte qu'une extrémité arrière (27) du premier peloton de véhicules (1a) se retrouve devant ledit au moins un véhicule suivant (3b) du second peloton de véhicules (1b), et contrôler ledit au moins un véhicule suivant (3b) du second peloton (1b) pour passer de la seconde voie (25) à la première voie (24) et rejoindre le premier peloton de véhicules (1a) à l'extrémité arrière (27) du premier peloton de véhicules (1a).

4. Régime de contrôle selon la revendication 3, **caractérisé en ce que** le régime de contrôle (40) est conçu pour contrôler ledit au moins un véhicule suivant (3a) du premier peloton de véhicule (1a) pour effectuer le changement de voie, puis contrôler ledit au moins un véhicule suivant (3a) du second peloton de véhicule (1a) pour effectuer le changement de voie, lors d'un dépassement où le premier peloton de véhicules (1a) dépasse le second peloton de véhicules (1b).

5. Programme informatique comprenant un code de programme qui, lorsque le code de programme est exécuté par un ordinateur, amène l'ordinateur à exécuter le procédé selon l'une quelconque des revendications 1 à 3.
